# EUROPÄISCHE PATENTANMELDUNG

(11) **EP 0 621 450 A2**
(43) Veröffentlichungstag der Anmeldung: **26.10.1994**
(21) Anmeldenummer: 94810205.8
(22) Anmeldetag: 12.04.1994
(51) Int. Cl.: F24D 11/00, F24D 3/08

(54) **Verfahren und Vorrichtung zur Erwärmung von Brauchwasser**

(30) Priorität: 23.04.1993 CH 1255/93
(71) Anmelder: Lachenmeier, Georg, CH-8055 Zürich (CH)
(72) Erfinder: Lachenmeier, Georg, CH-8055 Zürich (CH)
(74) Vertreter: Patentanwälte Breiter + Wiedmer AG

(57) **Zusammenfassung**

Bei einem Verfahren zur Erwärmung von Brauchwasser durch Aufheizen und Speichern von Heizungswasser sowie Erwärmen des Brauchwassers durch Wärmeaustausch mit dem Heizungswasser werden das Heizungswasser und das Brauchwasser zum Wärmeaustausch im Gegenstrom geführt.

Eine zur Durchführung des Verfahrens geeignete Vorrichtung weist mindestens einen Wärmeerzeuger (10) und einen diesem nachgeschalteten Speicher (12) zum Aufheizen und Speichern von Heizungswasser sowie einen dem Speicher (12) nachgeschalteten Wärmetauscher zur Erwärmung des Brauchwassers mittels des Heizungswassers auf. Hierbei erfolgt die Erwärmung des Brauchwassers während des Durchlaufs durch einen Gegenstrom-Wärmetauscher (14).

Das zu erwärmende Brauchwasser wird im Durchlaufverfahren auf die genau richtige Verbrauchstemperatur gebracht. Im Gegensatz zu Brauchwasser-Erwärmungsanlagen herkömmlicher Bauart wird die Spitzenbereitschaft nicht auf der Seite des Brauchwassers, sondern im Speicher gehalten. Dies bringt unter anderem den Vorteil, dass bei grossem Spitzenbedarf dieses System kostengünstiger ist als ein Brauchwassererwärmer herkömmlicher Bauart und gleicher Leistung. Die Vorrichtung eignet sich insbesondere zur Brauchwassererwärmung in Alternativenergieanlagen sowie in Grossanlagen wie Heimen, Spitälern, Ueberbauungen und Sportanlagen.

## Beschreibung

Die Erfindung betrifft ein Verfahren zur Erwärmung von Brauchwasser durch Aufheizen und Speichern von Heizungswasser sowie Erwärmen des Brauchwassers durch Wärmeaustausch mit dem Heizungswasser. Im Rahmen der Erfindung liegt auch eine Vorrichtung zur Durchführung des Verfahrens.

Zur Erwärmung von Brauchwasser sind Anlagen mit einem Boiler oder einem Speicher mit eingebautem oder separatem Boiler bekannt. Boiler sind jedoch mit dem Nachteil behaftet, dass über längere Zeit eine grosse Menge von Trinkwasser stillsteht und sich damit Krankheitserreger (z.B. Legionellen) vermehren und verbreiten können, sofern das stehende Trinkwasser nicht periodisch überhitzt wird. Zudem sind Boileranlagen für grosse Kapazitäten, wie sie bei Grossanlagen wie Heimen, Spitälern, Ueberbauungen und Sportanlagen gefordert werden, verhältnismässig teuer in der Anschaffung.

Angesichts dieser Gegebenheiten hat sich der Erfinder die Aufgabe gestellt, ein Verfahren der eingangs erwähnten Art sowie eine zur Durchführung des Verfahrens geeignete Vorrichtung zu schaffen, die ohne grössere Menge an stehendem Trinkwasser arbeiten und sich insbesondere für Alternativenergie- und Grossanlagen eignen.

Zur erfindungsgemässen Lösung der Aufgabe führt bei einem Verfahren der eingangs erwähnten Art, dass das Heizungswasser und das Brauchwasser zum Wärmeaustausch im Gegenstrom geführt werden.

Beim erfindungsgemässen Verfahren wird somit das zu erwärmende Brauchwasser im Durchlaufverfahren auf die genau richtige Verbrauchstemperatur gebracht, d.h. die Spitzenbereitschaft wird nicht auf der Seite des Brauchwassers gehalten, sondern auf der andern Seite des Gegenstromwärmetauschers.

Die erfindungsgemässe Vorrichtung weist mindestens einen Wärmeerzeuger und einen diesem nachgeschalteten Speicher zum Aufheizen und Speichern von Heizungswasser sowie einen dem Speicher nachgeschalteten Wärmetauscher zur Erwärmung des Brauchwassers mittels des Heizungswassers auf, wobei der Wärmetauscher ein Gegenstrom-Wärmetauscher, insbesondere ein Plattenwärmetauscher, ist.

Das erfindungsgemässe Verfahren sowie die zur Durchführung des Verfahrens geeignete erfindungsgemässe Vorrichtung weisen u.a. die folgenden Vorteile auf:
- Bei grossem Spitzenbedarf ist das vorliegende System kostengünstiger als ein Brauchwassererwärmer herkömmlicher Bauart und gleicher Leistung.
- Bei Anlagen, die bereits einen Wasserspeicher besitzen, kann ein zusätzlicher eingebauter oder separat stehender Boiler entfallen.
- Da das vorliegende System im Durchlaufverfahren arbeitet und sich somit keine grosse Menge von stillstehendem Trinkwasser ansammelt, ist die Gefahr der Vermehrung und Verbreitung von Krankheitserregern (z.B. Legionellen) unterbunden, sodass ein periodisches Ueberhitzen aus hygienischen Gründen sich erübrigt.
- Bei Kessel mit niedriger Betriebstemperatur, z.B. Gas-Kondensatkessel, sowie bei Wärmepumpen können niedrige Temperaturen gefahren werden, da der Wärmetauscher zwischen Erzeugung und Speicherung der Wärme entfällt.
- Die Schichtung des Wassers im Speicher wird im Vergleich zu herkömmlichen Speichersystemen verstärkt gefördert, wodurch Niedertemperatur-Energiequellen wie beispielsweise Wärmerückgewinnung und Sonnenenergie besser genutzt werden.
- Bei aus Kapazitäts- oder Ueberschussgründen höheren Speichertemperaturen wird das Brauchwasser trotzdem nicht über 60°C erwärmt, sodass ein Brauchwassermischer entfallen kann und zudem die Kalksteinbildung verhindert wird.

Bei einer bevorzugten Ausführungsart der erfindungsgemässen Vorrichtung sind der Speicher und der Gegenstrom-Wärmetauscher innerhalb eines gemeinsamen, gegenüber der Umgebung isolierten Gehäuses angeordnet.

Zweckmässigerweise wird der Durchfluss des Heizungswassers durch den Wärmetauscher über eine in der Drehzahl variable Pumpe erzeugt, die zwischen dem Speicher und dem Gegenstrom-Wärmetauscher angeordnet ist. Die Pumpe ist bevorzugt eine Asynchron-Spaltrohrpumpe, deren Drehzahl mittels Phasenanschnittsteuerung geregelt wird, wobei die Drehzahl bevorzugt einer Steuereinheit auf Mikroprozessorbasis vorgegeben wird. Vorteilhafterweise wird die Drehzahl der Pumpe in Abhängigkeit der im Brauchwasserzulauf gemessenen Wassergeschwindigkeit geregelt. Hierzu ist im Brauchwasserzulauf ein Durchflussmesser, insbesondere ein Flügelradzähler, vorgesehen. Durch die optimale Regelung des Heizungswasserdurchflusses im Primärkreislauf kann das erwärmte Brauchwasser konstant auf der gewüschten Temperatur gehalten werden.

Bei Uebertemperaturen des Heizungswassers im Speicher kann die Drehzahl der Pumpe entsprechend einer Temperatur-Sollwert-Vorgabe für das Brauchwasser geregelt werden. Hierzu sind zumindest im Speicher Temperatursensoren angeordnet. Durch die Temperatursensoren optimiert sich das System über die Tage selbst und kann so auf die Leistungsfähigkeit des Wärmetauschers reagieren.

Zur Verbesserung der Warmwasserverfügbarkeit kann brauchwasserseitig eine Zirkulationspumpe in einen Brauchwasserkreislauf mit dem Gegenstrom-Wärmetauscher geschaltet werden. Die Zirkulationspumpe wird über die gleiche Steuerung wie die Pumpe im Primärkreislauf geregelt.

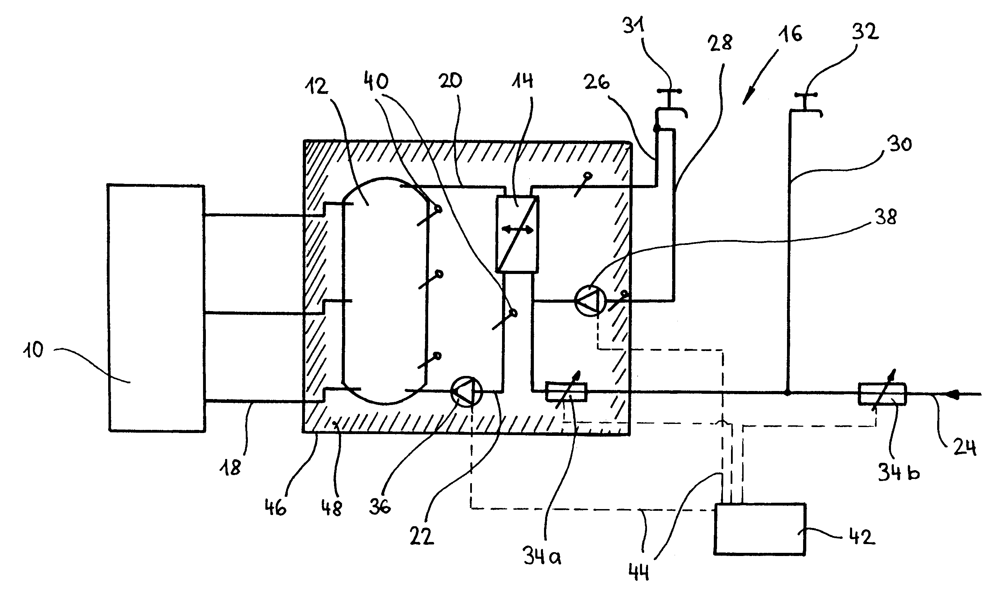

Weitere Vorteile, Merkmale und Einzelheiten der Erfindung ergeben sich aus der nachfolgenden Beschreibung eines bevorzugten Ausführungsbeispiels sowie anhand der Zeichnung; dieser zeigt in ihrer einzigen Figur eine erfindungsgemässe Vorrichtung in schematischer Darstellung.

Ein System zur Erwärmung von Brauch- oder Trinkwasser weist einen Wärmeerzeuger 10 zum Aufheizen von Heizungswasser auf. Der Wärmeerzeuger 10 steht über Rohrleitungen 18 mit einem Speicherkessel 12 in Verbindung. In diesem ersten Kreislauf wird vom Wärmeerzeuger 10 aufgeheiztes Heizungswasser dem Speicherkessel 12 in Abhängigkeit von der Vorlauftemperatur und unter Berücksichtigung der Schichtung des Wassers im Kessel in der gewünschten Höhe zugeführt und entsprechend der für das als Wärmeerzeuger 10 gewählte System erforderlichen Rücklauftemperatur in der geeigneten Höhe wieder entnommen und zum Wärmeerzeuger 10 zurückgeführt. Als Wärmeerzeuger 10 können Öl- und gasbeheizte Heizungen, Solaranlagen, Wärmepumpen und andere Wärmeerzeugungssysteme einzeln oder in Kombination an den Speicherkessel 12 angeschlossen sein.

Dem Speicherkessel 12 ist in einem Primärkreislauf über eine im oberen Kesselbereich angeordnete Vorlaufleitung 20 sowie eine in den unteren Kesselbereich zurückführende Rücklaufleitung 22 ein Plattenwärmetauscher 14 nachgeschaltet. Im Gegenstrom zum Primärkreislauf wird bei Bedarf Brauchwasser aus einer Kaltwasser-Zufuhrleitung 24 durch den Plattenwärmetauscher 14 geleitet und über eine Warmwasser-Entnahmeleitung 26 einem Warmwasserhahn 31 zugeführt. In diesem Brauchwasserleitungssystem 16 ist zur Verbesserung der Warmwasserverfügbarkeit ein Sekundärkreislauf vorgesehen, in welchem bei geschlossenem Warmwasserhahn 31 Brauchwasser aus der Warmwasser-Entnahmeleitung 26 über eine Zirkulationsleitung 28 unter Aufrechterhaltung einer Warmwasserzirkulation im Warmwasserteil des Brauchwasserleitungssystems dem Plattenwärmetauscher 14 wieder zugeführt wird. Kaltes Brauchwasser wird in üblicher Weise direkt der Kaltwasser-Zufuhrleitung 24 entnommen und über eine Kaltwasser-Entnahmeleitung 30 einem Kaltwasserhahn 32 zugeführt.

Zur Steuerung der Anlage dient ein computergesteuertes Messund Regelsystem 42, welches über elektrische Verbindungen 44 mit im Speicherkessel 12, in der Rücklaufleitung 22 und in der Zirkulationsleitung 28 angeordneten Temperatursensoren 40, mit einer Asynchron-Spaltrohrpumpe 36 in der Rücklaufleitung 22, mit einer Zirkulationspumpe in der Zirkulationsleitung 28 sowie mit Flügelrad-Durchfluss-Zählern 34a,b in der Kaltwasser-Zufuhrleitung 24 verbunden ist.

Bei Oeffnung des Warmwasserhahns 31 beginnt sich der Flügelradzähler 34a zu drehen und aktiviert innerhalb einer Verzögerungszeit von Millisekunden die Asynchron-Spaltrohrpumpe 36 im Primärkreislauf. Hierbei wird die Drehzahl der Pumpe mittels Phasenanschnittsteuerung in Abhängigkeit von der über den Flügelradzähler 34a mit magnetischer Abtastung gemessenen Wasserdurchflussmenge geregelt, wobei eine zusätzliche Regelung beispielsweise durch Vorgabe der Sollwerttemperatur in der Warmwasser-Entnahmeleitung 26 über die Temperatursensoren 40 erfolgen kann. Das Rechenwerk für die Durchflussmessung ist in der Steuereinheit 42 ingegriert.

Die thermische Isolation des Speicherkessels 12 erfolgt über ein diesen umschliessendes Gehäuse 46, welches auf dessen Innenseite mit Isolationsmaterial 48 ausgekleidet ist. In diesem Gehäuse 46 ist auch der gesamte Primärkreislauf mit der Vorlaufleitung 20, der Rücklaufleitung 22, der Asynchron-Spaltrohrpumpe 36, dem Plattenwärmetauscher 14 sowie ein Teil des Warmwasserkreislaufs mit der Zirkulationspumpe 38 eingeschlossen.

## Patentansprüche

1. Verfahren zur Erwärmung von Brauchwasser durch Aufheizen und Speichern von Heizungswasser sowie Erwärmen des Brauchwassers durch Wärmeaustausch mit dem Heizungswasser,
dadurch gekennzeichnet,
dass das Heizungswasser und das Brauchwasser zum Wärmeaustausch im Gegenstrom geführt werden.

2. Verfahren nach Anspruch 1, dadurch gekennzeichnet, dass der Durchfluss des Heizungswassers durch den Wärmetauscher (14) über eine in der Drehzahl variable Pumpe (36) erzeugt wird.

3. Verfahren nach Anspruch 2, dadurch gekennzeichnet, dass die Drehzahlregelung einer Asynchron-Spaltrohrpumpe mittels Phasenanschnittsteuerung erfolgt.

4. Verfahren nach Anspruch 2 oder 3, dadurch gekennzeichnet, dass die Drehzahl einer Steuereinheit auf Mikroprozessorbasis vorgegeben wird.

5. Verfahren nach einem der Ansprüche 2 bis 4, dadurch gekennzeichnet, dass die Drehzahl der Pumpe (36) in Abhängigkeit der gemessenen Wassergeschwindigkeit geregelt wird.

6. Verfahren nach einem der Ansprüche 2 bis 5, dadurch gekennzeichnet, dass bei Uebertemperatur des Heizungswassers im Speicher (12) die Drehzahl der Pumpe (36) entsprechend einer Temperatur-Sollwert-Vorgabe für das Brauchwasser geregelt wird.

7. Vorrichtung zur Erwärmung von Brauchwasser mit mindestens einem Wärmeerzeuger (10) und einem diesem nachgeschalteten Speicher (12) zum Aufheizen und Speichern von Heizungswasser sowie einem dem Speicher (12) nachgeschalteten Wärmetauscher zur Erwärmung des Brauchwassers mittels des Heizungswassers, dadurch gekennzeichnet, dass der Wärmetauscher ein Gegenstrom-Wärmetauscher (14) ist.

8. Vorrichtung nach Anspruch 7, dadurch gekennzeichnet, dass der Gegenstrom-Wärmetauscher (14) ein Plattenwärmetauscher ist.

9. Vorrichtung nach Anspruch 7 oder 8, dadurch gekennzeichnet, dass der Speicher (12) und der Gegenstrom-Wärmetauscher (14) innerhalb eines gemeinsamen, gegenüber der Umgebung isolierten Gehäuses (46) angeordnet sind.

10. Vorrichtung nach einem der Ansprüche 7 bis 9, dadurch gekennzeichnet, dass zwischen dem Speicher (12) und dem Gegenstrom-Wärmetauscher (14) eine in der Drehzahl variable Pumpe, insbesondere eine Asynchron-Spaltrohrpumpe, angeordnet ist.

11. Vorrichtung nach einem der Ansprüche 7 bis 10, dadurch gekennzeichnet, dass im Brauchwasserzulauf mindestens ein Durchflussmesser (34a,b), insbesondere ein Flügelradzähler, angeordnet ist.

12. Vorrichtung nach einem der Ansprüche 7 bis 11, dadurch gekennzeichnet, dass zumindest im Speicher (12) Temperatursensoren (40) angeordnet sind.

13. Vorrichtung nach einem der Ansprüche 7 bis 12, dadurch gekennzeichnet, dass brauchwasserseitig eine Zirkulationspumpe (38) in einen Brauchwasserkreislauf mit dem Gegenstrom-Wärmetauscher (14) geschaltet ist.
